# EUROPÄISCHE PATENTSCHRIFT

(11) **EP 1 978 885 B1**
(45) Veröffentlichungstag und Bekanntmachung des Hinweises auf die Patenterteilung: **15.05.2013**
(21) Anmeldenummer: 07703161.5
(22) Anmeldetag: 31.01.2007
(51) Int. Cl.: A61C 8/00

(54) **ZAHNIMPLANTAT**
TOOTH IMPLANT
IMPLANT DENTAIRE

(30) Priorität: 31.01.2006 DE 102006005667
(43) Veröffentlichungstag der Anmeldung: 15.10.2008
(73) Patentinhaber: Prowital GmbH, 75446 Wiernsheim (DE)
(72) Erfinder: SCHERBERGER, Rolf, 75417 Mühlacker (DE)
(74) Vertreter: Lindner, Michael
(86) Internationale Anmeldenummer: PCT/EP2007/000817
(87) Internationale Veröffentlichungsnummer: WO 2007/088033

(56) Entgegenhaltungen:
- WO-A-98/52488
- WO-A-2004/080328
- WO-A-2005/058178
- DE-A1- 4 238 383
- DE-C1- 4 233 605

## Beschreibung

Die vorliegende Erfindung betrifft ein Zahnimplantat zum Einsatz in den menschlichen Kieferknochen gemäß Oberbegriff des Anspruchs 1.

Zahnimplantate der vorgenannten Art sind allgemein bekannt. Ein Zahnimplantat wird in den menschlichen Kieferknochen eingesetzt und dient dann dazu, ein so genanntes Abutment aufzunehmen. Dieses Abutment trägt dann beispielsweise den keramischen Aufbau zur Ausbildung eines Zahns. Üblicherweise wird das Abutment mittels einer Schraube mit dem Zahnimplantat verbunden, wobei zusätzliche Mittel vorgesehen sind, um die Verbindung zwischen Zahnimplantat und Abutment verdrehsicher auszugestalten. In den Druckschriften WO 2005/058178 A, DE 4238383 A1 oder DE 4233605 C1 sind beispielsweise verschiedene Ausgestaltungen von Zahnimplantaten offenbart.

In dem Dokument DE 196 33 570 ist beispielsweise ein Zahnimplantat beschrieben, in das ein Abutment (dort Distanzhülse genannt) einsetzbar ist. Als Verdrehsicherung sind im Abutment in einem Formschlussabschnitt Formschlussnocken vorgesehen, die mit im Zahnimplantat entsprechend vorgesehenen Nuten zusammenwirken. Das Abutment dieser bekannten Lösung besitzt neben dem Formschlussabschnitt mit den Nocken einen Führungsabschnitt sowie einen Zentrierabschnitt mit einem Zentrierbund, die zusammen die Aufgabe haben, einerseits das Einführen des Abutments in das Zahnimplantat zu erleichtern und andererseits das Abutment spielfrei im Zahnimplantat zu halten.

In dem Dokument WO 98/524889 A, worauf die zweiteilige Form des Anspruchs 1 basiert, ist ein Zahnimplantat nach dem Oberbegriff des Anspruchs 1 beschrieben.

Vor dem Einsetzen eines Abutments in das Zahnimplantat wird dieses während des Heilungsprozesses im Knochen mit einer Verschlussschraube verschlossen, so dass die Bohrung im Zahnimplantat abgedichtet ist. Zum Einsetzen dieser Verschlussschraube ist es ebenfalls notwendig, eine Zentrierung und Führung vorzusehen, so dass ein Verkanten der Schraube im Zahnimplantat vermieden werden kann. Aufgrund der in der oben genannten Druckschrift vorgesehenen stufigen Ausbildung der Bohrung im Zahnimplantat ist eine gute Führung für die Verschlussschraube nur schlecht gewährleistbar, da der hierfür geeignete Längsabschnitt im Zahnimplantat sehr weit unten, d.h. von dem oberen Randbereich entfernt ist. Damit erfährt die Verschlussschraube erst eine Führung, wenn sie bereits fast vollständig in das Zahnimplantat eingeführt wurde.

Vor diesem Hintergrund besteht die Aufgabe der vorliegenden Erfindung darin, ein Zahnimplantat der vorgenannten Art so weiterzubilden, dass einerseits die Führung und Verdrehsicherung für das Abutment vorhanden bleiben und andererseits eine gute Führung für eine Verschlussschraube erzielt wird. Darüber hinaus sollen diese Funktionen innerhalb eines möglichst kleinen Bereichs innerhalb des Zahnimplantats bereitgestellt werden.

Diese und andere Aufgaben werden von dem eingangs genannten Zahnimplantat durch die in Anspruch 1 angegebenen Merkmale gelöst. Insbesondere wird sie dadurch gelöst, dass der Durchmesser des zweiten Längsabschnitts dem Durchmesser des Kreises entspricht, auf dem die zweiten Führungsfläche der Nocken liegen.

D.h. mit anderen Worten, dass die nach innen gewandten Flächen der Nocken eine gewölbte Fläche besitzen und zusammen auf einer gedachten Zylinderfläche liegen, die wiederum konzentrisch zur Innenfläche der Bohrung ist. Durch diese Ausgestaltung der Nocken ist es nun möglich, eine Verschlussschraube gleich am Anfang des Einführvorgangs an diesen Führungsflächen der Nocken zu führen. Durch deren gewölbte Ausgestaltung liegen sie direkt an der Verschlussschraube an.

Zur Bereitstellung der Verdrehsicherung ist das Abutment mit Nuten versehen, in die die Nocken eingreifen können.

Es zeigt sich somit, dass sowohl die Verdrehsicherung für das Abutment als auch die Führungsfunktion für eine Verschlussschraube mit wenigen Maßnahmen auf sehr kleinem Raum erzielt werden können. Darüber hinaus steht dem Abutment eine sehr große Führungsfläche im Bereich des ersten Längsabschnitts zur Verfügung, so dass die auftretenden hohen Kräfte gut aufgenommen werden können. Da die auf eine Verschlussschraube wirkenden Kräfte sehr viel geringer sind, reicht die deutlich geringere Führungsfläche, die durch die Nocken bereitgestellt wird, ebenfalls zur Aufnahme der Kräfte aus. Schließlich kann die Verschlussschraube sehr einfach ausgeführt werden, da der Schraubenkörper nur einen Durchmesser haben muss.

Es zeigt sich also, dass mit der erfindungsgemäßen Lösung ein Zahnimplantat geschaffen wurde, das mehrere Funktionen auf geringstem Raum optimal zur Verfügung stellt. Die bei den bisherigen Zahnimplantaten bereitgestellte Verdrehsicherung erhält bei der erfindungsgemäßen Lösung eine weitere Funktion, so dass auf die hierfür bisher vorgesehenen zusätzlichen Mittel verzichtet werden kann.

Gemäß einer bevorzugten Weiterbildung sind zumindest drei Nocken vorgesehen, die - in Umfangsrichtung des ersten Längsabschnitts - gleichmäßig beabstandet zueinander angeordnet sind.

Diese Maßnahme hat den Vorteil, dass die Führung der Verschlussschraube verbessert wird. Die Anzahl von insgesamt drei Nocken hat sich hierbei als besonders vorteilhaft herausgestellt, wobei der Abstand der Nocken 120° beträgt.

Bei einer bevorzugten Weiterbildung weisen die Nocken jeweils eine dem proximalen Ende der Bohrung zugewandte Fläche auf, die sich senkrecht zur ersten Führungsfläche erstreckt.

D.h. mit anderen Worten, dass die Unterseite der Nocken senkrecht zur Längsachse des Zahnimplantats verläuft. Diese Flächen können für Fixierungszwecke benutzt werden, derart, dass das in das Zahnimplantat eingeführte Bauteil mit entsprechenden Vorsprüngen versehen ist, die durch Drehen des Bauteils in Eingriff mit den Nocken des Zahnimplantats gelangen können.

Bei einer bevorzugten Weiterbildung weisen die Nocken jeweils eine dem distalen Ende zugewandte obere Fläche auf, die zur ersten Führungsfläche schräg zum proximalen Ende abfallend verläuft.

D.h. mit anderen Worten, dass die oberen Flächen der Nocken trichterförmig angeordnet sind und somit das Einbringen des Abutments in die Bohrung des Zahnimplantats erleichtern.

Bei einer bevorzugten Weiterbildung sind die oberen Flächen der Nocken unmittelbar am distalen Ende der Bohrung angeordnet.

Diese Maßnahme hat den Vorteil, dass im Zahnimplantat wenig Platz benötigt wird, und andererseits die Führungsfunktion für die Verschlussschraube schnell erzielt wird.

Die der Erfindung zugrunde liegende Aufgabe wird auch von einem Abutment gelöst, das an das erfindungsgemäße Zahnimplantat angepasst ist und einen zylindrischen Längsabschnitt aufweist, dessen Außendurchmesser der ersten Führungsfläche entspricht und der zumindest eine der Anzahl der Nocken entsprechende Anzahl von Nuten aufweist, wobei die Nocken und die Nuten zusammen als Verdrehsicherung dienen. Bevorzugt weisen die Nuten an ihrem proximalen Ende einen konischen Längsabschnitt auf.

Die letztgenannte Maßnahme hat den Vorteil, dass das "Einfädeln" des Abutments in das Zahnimplantat durch die trichterförmigen Nuten erleichtert wird.

Schließlich betrifft die vorliegende Erfindung auch eine Verschlussschraube, die an das erfindungsgemäße Zahnimplantat angepasst ist. Die Verschlussschraube weist einen Kopf, der die Bohrung des Zahnimplantats abschließt, einen sich an den Kopf anschließenden Führungsabschnitt und einen Gewindeabschnitt auf, der mit dem Gewinde des zweiten Längsabschnitts des Zahnimplantats zusammenwirkt. Erfindungsgemäß entspricht der Durchmesser des Führungsabschnitts dem Durchmesser, den die zweiten Führungsflächen der Nocken des Zahnimplantats bilden.

Dadurch, dass die Verschlussschraube an ihrem unteren Ende im Zahnimplantat eingeschraubt ist und an ihrem oberen Ende durch die Nocken des Zahnimplantats spielfrei geführt ist, entsteht eine außerordentlich gute Verbindung zwischen Zahnimplantat und der Verschlussschraube.

Weitere Vorteile und Ausgestaltungen der Erfindungen ergeben sich aus der Beschreibung, den beiliegenden Zeichnungen und den abhängigen Ansprüchen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand von Ausführungsbeispielen mit Bezug auf die Zeichnung näher erläutert. Dabei zeigen:
- Fig. 1a, b, c: Seitenansichten eines erfindungsgemäßen Zahnimplantats und eine Abwandlung davon;
- Fig. 2: eine schematische Darstellung des Zahnimplantats von oben;
- Fig. 3a-d: verschiedene schematische Darstellungen eines erfindungsgemäßen Abutments;
- Fig. 4a, b: eine schematische Darstellung einer Verschlussschraube, die in einer Abbildung im erfindungsgemäßen Zahnimplantat eingesetzt ist; und
- Fig. 5: eine schematische Darstellung einer Schraube zur Befestigung des Abutments im Zahnimplantat.

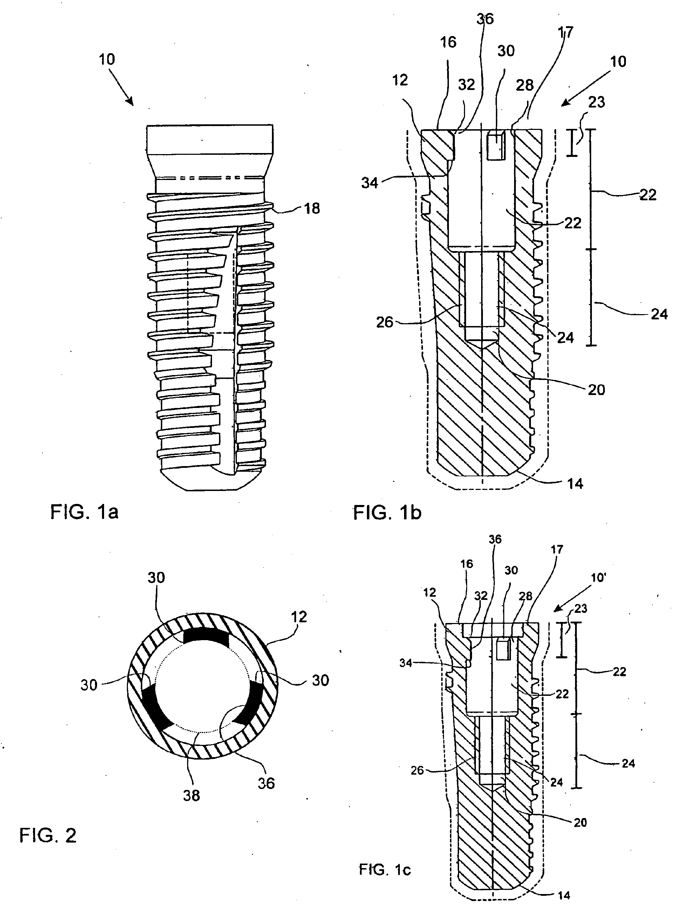

In Fig. 1 ist ein Zahnimplantat (nachfolgend kurz Implantat genannt) schematisch dargestellt und mit dem Bezugszeichen 10 gekennzeichnet. Das Implantat 10 ist aus einem Metall, vorzugsweise Titan, oder einem keramischen Werkstoff hergestellt. Das Implantat 10 hat einen länglichen rotationssymmetrischen Aufbau, wobei an der Außenseite ein Gewinde 18 vorgesehen ist. Mit Hilfe dieses Außengewindes 18 lässt sich das Implantat 10 im menschlichen (oder tierischen) Kieferknochen einschrauben und verankern.

In Fig. 1b ist der innere Aufbau des Implantats 10 zu erkennen. Das Implantat 10 besteht aus einem Implantat-Körper 12, der ein proximales Ende 14 und ein distales Ende 16 besitzt. Am distalen Ende 16 des Implantat-Körpers 12 ist eine Bohrung 20 vorgesehen, die sich über einen ersten Längsabschnitt 22 und einen zweiten Längsabschnitt 24 in Richtung des proximalen Endes 14 erstreckt. Deutlich zu erkennen ist in Fig. 1b, dass der Durchmesser der Bohrung im ersten Längsabschnitt 22 größer ist als der Durchmesser im zweiten Längsabschnitt 2. Dadurch entsteht am Grund des ersten Längsabschnitts 22 eine Stufe.

Zum Befestigen einer Schraube ist im zweiten Längsabschnitt 24 ein Innengewinde 26 vorgesehen.

Fig. 1b lässt noch erkennen, dass am distalen Ende 16 eine Stirnfläche vorhanden ist, die zwischen der Bohrung 20 und dem äußeren Rand des Implantat-Körpers 12 entsteht.

Die Innenseite der Bohrung 20 im Bereich des ersten Längsabschnitts 22 ist als Führungsfläche 28 ausgebildet. Das bedeutet, dass diese Bohrung eine besonders hohe Maßhaltigkeit und gute Oberflächenbeschaffenheit besitzt.

In einem oberen dritten Längsabschnitt 23, der unmittelbar an der Stirnfläche 17 beginnt, sind an der Innenfläche der Bohrung 20 Nocken 30 ausgebildet. Die Nocken 30 ragen, wie in Fig. 2 gut zu erkennen ist, radial nach innen und erstrecken sich in Längsrichtung des Implantat-Körpers. Die Nocken 30 besitzen eine dem distalen Ende 16 zugewandte obere Flanke 32, die schräg nach innen abfallend verläuft. Die gegenüberliegende untere Flanke 34 ist dagegen senkrecht zur Längsachse bzw. zur ersten Führungsfläche 28 ausgebildet.

Die Nocken 30 besitzen des Weiteren eine nach innen zeigende Fläche 36, die als zweite Führungsfläche ausgebildet ist. Wie sich aus Fig. 2 ergibt, sind die zweiten Führungsflächen 36 der Nocken 30 so ausgebildet, dass sie auf einer gedachten Kreislinie 38 liegen. D.h. mit anderen Worten, dass der Radius der Wölbung dieser zweiten Führungsflächen 36 dem Radius der in Fig. 2 gestrichelt dargestellten Kreislinie 38 entspricht. Zudem ist dieser Durchmesser kleiner als der Durchmesser der Bohrung 22 im ersten Längsabschnitt 22 und entspricht dem Durchmesser der Bohrung 20 im zweiten Längsabschnitt 24.

Im vorliegenden Ausführungsbeispiel sind insgesamt drei Nocken 30 vorgesehen und gleichmäßig in einem Abstand von 120° zueinander angeordnet. Die Verwendung von drei Nocken ist jedoch rein beispielhaft gewählt, so dass eine andere Anzahl ebenfalls denkbar ist. Allerdings ist an dieser Stelle festzuhalten, dass die Verwendung von nur einer Nocke zwar eine Verdrehsicherung bereitstellen kann, nicht jedoch die zusätzlich gewünschte Führungsfunktion.

Aus den Fig. 1 und 2 lässt sich noch erkennen, dass die Wanddicke des Implantat-körpers 12 im Bereich des dritten Längsabschnitts 23 größer ist als in dem nachfolgenden Längsabschnitt, in dem unter anderem auch das Gewinde 18 vorgesehen ist. Der Außendurchmesser des Gewindes 18 entspricht etwa dem Außendurchmesser des Implantat-Körpers 12 im Bereich des dritten Längsabschnitts 23.

In Fig. 1c ist ein Implantat 10' gezeigt, das gegenüber dem zuvor beschriebenen etwas abgewandelt ist. Der Unterschied besteht darin, dass der dritte Längsabschnitt 23 etwas verlängert ist, so dass die Nocken 30 einen Abstand zur oberen Stirnfläche 17 haben. Zudem besitzt die Bohrung 20 im oberen Teil des Längsabschnitts 23 einen etwas größeren Durchmesser als der sich daran anschließende Teil, in dem die Nocken 30 liegen.

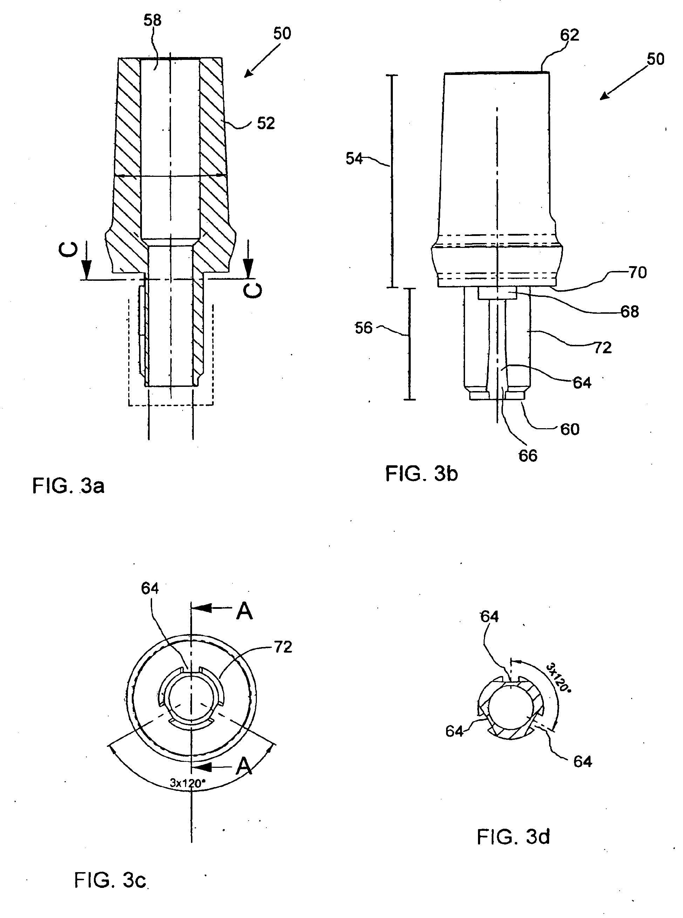

In den Fig. 3a bis 3d ist ein Abutment schematisch dargestellt und mit dem Bezugszeichen 50 gekennzeichnet. Dieses Abutment 50 wird in einem Zahnimplantat 10 befestigt und trägt den keramischen Aufbau, beispielsweise für eine Krone. Da der außerhalb des Zahnimplantats liegende Bereich des Abutments dem bekannten Aufbau entspricht, soll darauf nachfolgend nicht weiter im Detail eingegangen werden.

Das Abutment 50 besitzt einen Abutmentkörper 52, der einen ersten Längsabschnitt 54 und einen sich daran anschließenden zweiten Längsabschnitt 56 aufweist. Der erste Längsabschnitt 54 dient der Aufnahme eines keramischen Aufbaus, während der zweite Längsabschnitt 56 in die Bohrung 20 des Implantats 10 eingeführt wird.

Das Abutment 50 besitzt eine Bohrung 58, die sich vom proximalen Ende 60 zum distalen Ende 62 erstreckt. Zum Befestigen des Abutments 50 im Zahnimplantat 10 wird eine Schraube durch diese Bohrung 58 hindurchgesteckt und im Gewinde 26 des Implantats 10 festgeschraubt.

Der zweite Längsabschnitt 56 hat eine zylindrische Form mit einer zylindrischen Außenfläche, die als Führungsfläche 72 dient. Der Durchmesser dieses Abschnitts 56 entspricht dem Durchmesser der Bohrung 20 im Bereich des ersten Längsabschnitts 22. Der erste Längsabschnitt 54 des Abutments 50 hat einen größeren Durchmesser, so dass eine Stufe mit einer Auflagefläche 70 entsteht. Im eingesetzten Zustand liegt diese Auflagefläche 70 auf der Stirnfläche 17 des Implantats 10 auf.

In der Führungsfläche 72 des Abutments 50 sind Nuten 64 eingebracht, die sich parallel zur Längsachse erstrecken. Die Nuten 64 erstrecken sich vom unteren proximalen Ende 60 bis zur Auflagefläche 70 und sind zum proximalen Ende hin randoffen ausgebildet. Die Breite dieser Nuten 64 entspricht zumindest der Breite der Nocken 30 des Zahnimplantats 10.

Um ein Einsetzen des Abutments in die Bohrung 20 zu erleichtern, ist der proximale Abschnitt 66 konisch ausgebildet, wobei der breitere Bereich am proximalen Ende 60 liegt. Diese Trichterform erleichtert das "Einfädeln" der Nocken 30 in die Nuten 64.

Wie sich aus den Fig. 3c und 3d ergibt, sind im vorliegenden Ausführungsbeispiel drei Nuten 64 vorgesehen, die in einem Abstand von 120° zueinander angeordnet sind.

Das Abutment 50 ist folglich in mehreren (drei unterschiedlichen) Drehstellungen in das Implantat 10 einführbar, wobei dann die Nocken 30 in die Nuten 64 gelangen. Dieser Formschluss aus Nocken und Nuten liefert die gewünschte Rotationssicherung.

Gleichzeitig wirkt die Führungsfläche 72 des Abutments 50 mit der Führungsfläche 28 im ersten Längsabschnitt 22 der Bohrung 20 zusammen und erzielt auf diese Weise eine spielfreie Führung beim Einführen des Abutments und einen sicheren spielfreien Halt im eingesetzten Zustand.

Die zweiten Führungsflächen 36 an den Nocken 30 haben in diesem Fall keine Funktion.

An dieser Stelle sei noch angemerkt, dass die Nuten 64 im Bereich der Auflagefläche 70 in einen Freistich 68 münden, der die Nut nach links und rechts öffnet.

Diese Maßnahme hat fertigungstechnische Gründe und verhindert, dass sich die Nut 64 im Bereich der Auflagefläche 70 fertigungsbedingt verjüngt.

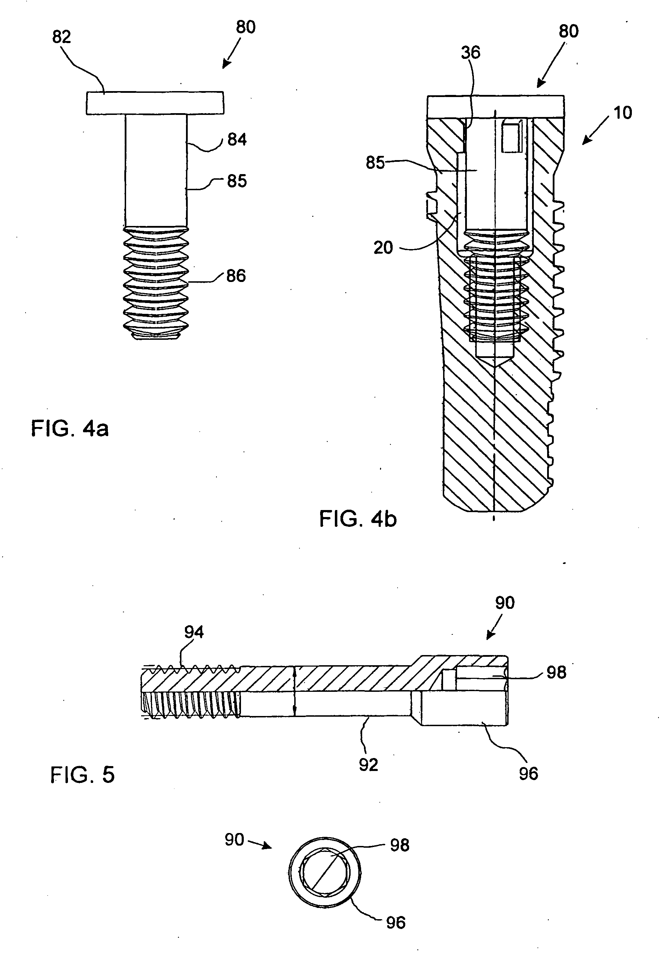

Wie bereits erwähnt, wird das Abutment 50 in das Implantat 10 eingesteckt und mit einer Schraube, die in die Bohrung 51 eingesetzt wird, verschraubt. Eine solche Schraube ist in Fig. 5 schematisch dargestellt und mit dem Bezugszeichen 90 gekennzeichnet. Die Schraube 90 umfasst einen Schaft 92, an dessen Ende ein Gewinde 94 ausgebildet ist. Die Dicke des Schafts 92 entspricht dabei dem kleineren Durchmesser der Bohrung 58 im Abutment 50 (vgl. Fig. 3a).

Schließlich weist die Schraube 90 einen Schraubenkopf 96 mit einem Innensechskant 98 auf.

Es ist bekannt, dass nach dem Einsetzen des Implantats 10 in den Kieferknochen ein Einsetzen des Abutments 50 noch nicht möglich ist. Um während der Heilphase die Bohrung 20 im Implantat 10 abzudichten, wird eine Verschlussschraube eingedreht. Eine solche Verschlussschraube ist schematisch in Fig. 4a dargestellt und mit dem Bezugszeichen 80 gekennzeichnet. Die Verschlussschraube 80 umfasst eine Abdeckkappe 82, die die Öffnung der Bohrung 20 im Zahnimplantat überdeckt. An die Abdeckkappe 82 schließt sich ein Schraubenhals 84 an, der eine Führungsfläche 85 besitzt. Schließlich ist noch am unteren Ende der Schraube ein Gewinde 86 vorgesehen, das mit dem Innengewinde 26 des Implantats 10 zusammenwirkt und dessen Durchmesser kleiner oder gleich dem Durchmesser der Führungsfläche 85 ist.

Der Durchmesser der Führungsfläche 85 ist nun so gewählt, dass er dem Durchmesser der in Fig. 2 gezeigten Kreislinie 38 entspricht. Damit liegen die Führungsflächen 36 der Nocken 30 beim Einführen der Schraube an der Führungsfläche 85 an. Dies ist in Fig. 4b gut zu erkennen.

Da die Führungsflächen 36 der Nocken 30 unmittelbar am distalen Ende 16 des Implantats 10 beginnen, erhält die Verschlussschraube 80 sehr schnell eine Führung durch Zusammenwirken der Führungsfläche 85 mit den Führungsflächen 36 der Nocken 30, so dass ein sicheres Einführen und Einschrauben möglich wird.

Zusammenfassend ist somit festzustellen, dass das erfindungsgemäße Zahnimplantat 10 sowohl eine Verdrehsicherung als auch eine Führung für eine Verschlussschraube 80 innerhalb eines sehr kurzen Abschnitts (Längsabschnitt 23) ermöglicht. Während die Seitenflanken der Nocken 30 zusammen mit den Nuten 64 die Verdrehsicherung bewirken, dienen die gewölbten Innenflächen der Nocken 30 als Führungsflächen, die mit einer entsprechenden Führungsfläche an der Verschlussschraube zusammenwirken.

Am Ende sei noch darauf hingewiesen, dass die gezeigte Ausführungsform rein beispielhafter Natur ist und dass Variationen denkbar sind. So kann beispielsweise ohne weiteres die Anzahl der Nocken im Implantat erhöht werden. Es ist jedoch darauf zu achten, dass die Anzahl der Nocken ein geradzahliges Vielfaches der Anzahl der Nuten im Abutment ist. Zudem ist anzumerken, dass das Abutment 50 im Bereich des Längsabschnitts 56 zu ändern ist, wenn es mit dem Implantat 10' von Fig. 1c eingesetzt werden soll. Insbesondere kann der Freistich 68 entfallen, da die Nut 64 nicht bis zur Anschlagfläche 70 verlaufen muss. Weitere notwendige Änderungen ergeben sich direkt aus der Ausgestaltung des Zahnimplantats 10', so dass an dieser Stelle nicht darauf eingegangen werden muss.

Darüber hinaus ist darauf hinzuweisen, dass die Führungsflächen der Nocken nicht nur zum Führen der Verschlussschraube dienen können. Schließlich können die Nocken auch als Angriffsfläche für ein Eindrehwerkzeug dienen.

## Patentansprüche

1. Zahnimplantat zum Einsatz in den menschlichen Kieferknochen, mit
einer zu einem distalen Ende hin offenen zylindrischen Bohrung (20), die zur Aufnahme eines Längsabschnitts eines Abutments (50) ausgelegt ist, wobei ein dem distalen Ende benachbarter erster Längsabschnitt (22) der Bohrung (20) eine erste zylindrische Führungsfläche (28) aufweist, wobei im Bereich des ersten Längsabschnitts (22) zumindest zwei Nocken (30) vorgesehen sind, die radial nach innen ragen und jeweils eine konzentrisch zur ersten Führungsfläche liegende zweite Führungsfläche (36) aufweisen, und
einem zweiten Längsabschnitt (24), der sich an den ersten Längsabschnitt (22) proximal anschließt und einen kleineren Durchmesser als der erste Längsabschnitt (22) aufweist,
**dadurch gekennzeichnet, dass** der Durchmesser des zweiten Längsabschnitts (24) dem Durchmesser des Kreises entspricht, auf dem die zweiten Führungsflächen (36) der Nocken (30) liegen.

2. Zahnimplantat nach Anspruch 1, **dadurch gekennzeichnet, dass** zumindest drei Nocken (30) vorgesehen sind, die - in Umfangsrichtung des ersten Längsabschnitts (22) - gleichmäßig beabstandet zueinander angeordnet sind.

3. Zahnimplantat nach Anspruch 1 oder 2, **dadurch gekennzeichnet, dass** die Nocken (30) jeweils eine dem proximalen Ende (14) der Bohrung (20) zugewandte Fläche aufweisen, die sich senkrecht zur ersten Führungsfläche (28) erstrecken.

4. Zahnimplantat nach einem der vorhergehenden Ansprüche, **dadurch gekennzeichnet, dass** die Nocken (30) jeweils eine dem distalen Ende zugewandte obere Fläche (32) aufweisen, die zur ersten Führungsfläche (28) schräg zum proximalen Ende (14) abfallend verlaufen.

5. Zahnimplantat nach Anspruch 3, **dadurch gekennzeichnet, dass** der zweite Längsabschnitt (24) ein Gewinde (26) trägt.

6. Zahnimplantat nach einem der vorhergehenden Ansprüche, **dadurch gekennzeichnet, dass** ein Außengewinde (18) vorgesehen ist, dass sich - ausgehend vom proximalen Ende (14) - zumindest über einen Teil der Länge des Zahnimplantats erstreckt.

7. Zahnimplantat nach einem der vorhergehenden Ansprüche, **dadurch gekennzeichnet, dass** die obere Flächen der Nocken (30) unmittelbar am distalen Ende (16) der Bohrung (20) angeordnet sind.

8. Zahnimplantat nach einem der vorhergehenden Ansprüche, **dadurch gekennzeichnet, dass** sich die Nocken (30) in Längsrichtung der Bohrung (20) über einen Teil der Länge des ersten Längsabschnitts (22) erstrecken.

## Claims

1. A tooth implant for application in the human jaw bone, with
a cylindrical bore (20), which is open toward a distal end and is designed to receive a longitudinal portion of an abutment (50), wherein a first longitudinal portion (22) of the bore (20) adjacent to the distal end has a first cylindrical guide surface (28), wherein, in the area of the first longitudinal portion (22), at least two cams (30) are provided, which protrude radially inward and in each case have a second guide surface (36) lying concentric with respect to the first guide surface
a second longitudinal portion (24) which adjoins the proximal end of the first longitudinal portion (22) and has a smaller diameter than the first longitudinal portion (22), **characterized in that** the diameter of the second longitudinal portion (24) corresponds to the diameter of the circle on which the second guide surfaces (36) of the cams (30) lie.

2. The tooth implant as claimed in claim 1, wherein at least three cams (30) are provided which, in the circumferential direction of the first longitudinal portion (22), are arranged at a uniform distance from one another.

3. The tooth implant as claimed in claim 1, wherein the cams (30) each have a surface directed toward the proximal end of the bore (20) and extending perpendicular to the first guide surface (28).

4. The tooth implant as claimed in any of the preceding claims, wherein the cams (30) each have an upper surface (32) directed toward the distal end and falling away to the first guide surface (28) obliquely with respect to the proximal end (14).

5. The tooth implant as claimed in claim 3, wherein the second longitudinal portion (24) has a thread.

6. The tooth implant as claimed in any of the preceding claims, wherein an outer thread (18) is provided which, starting from the proximal end (14), extends at least over part of the length of the tooth implant.

7. The tooth implant as claimed in any of the preceding claims, wherein the upper surfaces of the cams (30) are arranged directly at the distal end (16) of the bore (20).

8. The tooth implant as claimed in any of the preceding claims, wherein, in the longitudinal direction of the bore (20), the cams (30) extend over part of the length of the first longitudinal portion (22).

## Revendications

1. Implant dentaire à poser dans l'os maxillaire humain, avec
un alésage cylindrique (20) ouvert en direction d'une extrémité distale, qui est conçu pour recevoir une partie longitudinale d'un abutment (50), dans lequel une première partie longitudinale (22) de l'alésage (20) voisine de l'extrémité distale présente une première surface de guidage cylindrique (28), dans lequel il est prévu dans la région de la première partie longitudinale (22) au moins deux taquets (30) qui font saillie radialement vers l'intérieur et qui présentent chacun une deuxième surface de guidage (36) concentrique à la première surface de guidage, et
une deuxième partie longitudinale (24), qui se raccorde côté proximal à la première partie longitudinale (22) et qui présente un plus petit diamètre que la première partie longitudinale (22),
**caractérisé en ce que** le diamètre de la deuxième partie longitudinale (24) correspond au diamètre du cercle, sur lequel se trouvent les deuxièmes surfaces de guidage (36) des taquets (30).

2. Implant dentaire selon la revendication 1, **caractérisé en ce qu'**il est prévu au moins trois taquets (30), qui sont disposés avec un espacement uniforme l'un de l'autre dans la direction périphérique de la première partie longitudinale (22).

3. Implant dentaire selon la revendication 1 ou 2, **caractérisé en ce que** les taquets (30) présentent respectivement une surface tournée vers l'extrémité proximale (14) de l'alésage (20), qui s'étendent perpendiculairement à la première surface de guidage (28).

4. Implant dentaire selon l'une quelconque des revendications précédentes, **caractérisé en ce que** les taquets (30) présentent respectivement une surface supérieure (32) tournée vers l'extrémité distale, qui descendent vers l'extrémité proximale (14) en oblique par rapport à la première surface de guidage (28).

5. Implant dentaire selon la revendication 3, **caractérisé en ce que** la deuxième partie longitudinale (24) porte un filet (26).

6. Implant dentaire selon l'une quelconque des revendications précédentes, **caractérisé en ce qu'**il est prévu un filet extérieur (18), qui s'étend - en partant de l'extrémité proximale (14) - au moins sur une partie de la longueur de l'implant dentaire.

7. Implant dentaire selon l'une quelconque des revendications précédentes, **caractérisé en ce que** les surfaces supérieures des taquets (30) sont disposées directement à l'extrémité distale (16) de l'alésage (20).

8. Implant dentaire selon l'une quelconque des revendications précédentes, **caractérisé en ce que** les taquets (30) s'étendent dans la direction longitudinale de l'alésage (20) sur une partie de la longueur de la première partie longitudinale (22).
